## Europäisches Patentamt
## European Patent Office
## Office européen des brevets

(19)

(11) Veröffentlichungsnummer: **0 086 325**
**B1**

(12) # EUROPÄISCHE PATENTSCHRIFT

(45) Veröffentlichungstag der Patentschrift:
**29.05.85**

(51) Int. Cl.⁴: **C 03 B 9/06**

(21) Anmeldenummer: **83100120.1**

(22) Anmeldetag: **08.01.83**

(54) Verfahren zur Herstellung von lichtstreuenden und strukturierten Oberflächen in einer Zwischenglasschicht.

(30) Priorität: **12.02.82 DE 3204959**

(43) Veröffentlichungstag der Anmeldung:
**24.08.83 Patentblatt 83/34**

(45) Bekanntmachung des Hinweises auf die Patenterteilung:
**29.05.85 Patentblatt 85/22**

(84) Benannte Vertragsstaaten:
**AT DE FR IT SE**

(56) Entgegenhaltungen:
**DE - B - 1 086 407**
**DE - C - 703 795**
**DE - C - 1 596 826**
**GB - A - 3 872**

(73) Patentinhaber: **Rosenthal Aktiengesellschaft,
Wittelsbacherstrasse 42 Postfach 1520,
D-8672 Selb/Bayern (DE)**

(72) Erfinder: **Boehm, Michael, Bei der Linde 42,
D-8672 Selb/Bayern (DE)**

**Beschreibung**

Die Erfindung betrifft ein Verfahren zur Erzeugung von lichtstreuenden und strukturierten Oberflächen in einer Zwischenglasschicht, indem die Oberfläche des Grundglases eines Külbels aufgerauht und nach der Behandlung mit einer zweiten Glasschicht überstochen wird.

Ein solches Verfahren ist aus der DE-PS 1 596 826 bekanntgeworden, indem das heiße Glaskülbel auf seiner Oberfläche aufgerauht wird, indem man es entweder in eine rauhe Glasform einbringt oder mit Glasmehl bestreut. Stattdessen kann man es auch mit einer geringen Menge Schaumglas überziehen. Anschließend wird das noch heiße Glaskülbel mit sublimierenden Metallverbindungen unter Einschaltung einer Reduzierung behandelt, um später eine Unterglasirisierung zu erhalten. Das so vorbereitete Külbel wird anschließend mit flüssigem Glas überstochen. Mit diesem Verfahren erhält man aber nur recht umständlich aufgerauhte Oberflächen. Vor allem lassen sich auf diese Weise keine Ornamente bzw. Kunstdekore mit plastischer Wirkung erzeugen.

Der Erfindung liegt deshalb die Aufgabe zugrunde, ein Verfahren der eingangs genannten Art so zu schaffen, daß es auf einfache und schnelle Art möglich ist, ein Glas mit plastischer Dekorwirkung zu erzielen.

Diese Aufgabe wird erfindungsgemäß dadurch gelöst, daß das aus Kristall- oder Bleiglas vorgeformte Külbel nach dem Abkühlen auf ca. 500 bis 600°C sandgestrahlt wird, worauf ein kurzfristiges Wiedererhitzen erfolgt, um anschließend die aufgerauhte Oberfläche des Grundglases mit einer zweiten Glasschicht zu überstechen; nach dem Fertigformen und einem weiteren Abkühlen wird der Glasgegenstand im Kühlofen getempert.

Weitere Verfahrensvariationen hinsichtlich des erfindungsgemäßen Hohlglasgegenstandes mit lichtstreuenden und strukturierten Oberflächen ergeben sich aus den Unteransprüchen. Durch mehrmaliges Sandstrahlen und Überstechen erhält man abgestufte Schattierungen, die einen plastischen Eindruck vermitteln. Eine weitere Maßnahme der Erfindung sieht vor, daß man die heißen äußeren Oberflächen des Külbels mit unterschiedlichen Körnungen sandstrahlt, um Strukturierungen zu erhalten bzw. die Oberfläche mit Schablonen abdeckt, um geometrische Ornamente oder Motive aufzutragen.

Der Vorteil des Sandstrahlens besteht darin, daß man auf einfache Weise strukturierte Oberflächen erhält, an der sich beim anschließenden Überstechen des Külbels mit flüssigem Glas Lufteinschlüsse bilden, wobei ein Bläschenschleier erzeugt wird, der eine effektvolle Wirkung auf den Betrachter hervorruft. Eine solche Art sandstrahlbearbeitete Gläser ergeben insbesondere ausgezeichnete Effekte, wenn die Lichtstrahlen schräg in das Glas einfallen. Auch der Kontrast zwischen klarem und mattem Glas ist sehr reizvoll. Unterschiedliche Wirkungen kann man aber auch erreichen, wenn man das sogenannte Grunddekor in Form des Bläschenschleiers teilweise abdeckt und für die Weiterbearbeitung einen Sand anderer Körnung verwendet oder den Schleier mit Metalloxiden einfärbt. Eine andere vorteilhafte Weiterbildung des erfindungsgemäßen Verfahrens ist auch darin zu sehen, daß man durch Auflegen von Schablonen unterschiedliche Motive erzeugt. So können auf rationelle Weise Glasdekore hergestellt werden, die eine plastische Wirkung besitzen, besonders wenn man Reliefs bzw. kleine Figuren entsprechend vor dem Überstechen sandstrahlt. Die Durchführung des Verfahrens erfolgt einfach mit einer Sandstrahlvorrichtung.

Im einzelnen kann das Verfahren zur Herstellung sowohl von Hohlglasgegenständen wie Vasen oder Dosen als auch kompakten Glasgegenständen wie Teller und Schalen in folgender Weise durchgeführt werden.

Aus der Glasschmelze mit einer Temperatur von 1250 bis 1400°C wird mittels einer Pfeife ein Vorposten entnommen. Für die Herstellung einer Vase hat beispielsweise ein solcher Külbel einen Durchmesser von 6 cm und eine Höhe von 9 cm. Nach dem Abkühlen wird das etwa 550 bis 600°C heiße Külbel mit Korundsand oder auch Stahlkies sandgestrahlt, wobei unter hohem Druck auf die Glasfläche einzelne Partikel geschleudert werden, wodurch aus der Glasoberfläche winzige Teilchen herausgeschlagen werden. Dabei wird die Fläche matt. Die Sandbestrahlung als Mittel der künstlerischen Glasverformung ist an sich nicht neu (DE-C-703 795 und GB-A-3 872 A. D. 1911), aber hier wird eine Kombination zwischen Mattierung und strukturierter Oberfläche auf dem heißen Külbel erzielt, wobei neben den sich bildenden Bläschen beim Überstechen noch weitere optische Effekte sich hinsichtlich eines Schleierglases ergeben. Nach dem Sandstrahlen müssen die Flächen abslut sauber sein, so daß man das Külbel mit Preßluft abspritzt. Eine Bearbeitung des sandgestrahlten Külbels kann auch so erfolgen, daß man weitere Flächen mit unterschiedlichen Sanden verschiedener Körnungen bearbeitet, wobei dann ein Ornament bzw. ein Motiv entsteht. Durch Auflegen verschiedener Schablonen können dann Motive entstehen wie zum Beispiel Blätter, die unterschiedliche Relieftiefen aufweisen, insbesondere im Bereich des Stengels oder auch der Blüten. Eine besondere Wirkung erzielt man auch, wenn solche Gegenstände noch beleuchtet werden. Dabei haben solche Sandstrahlarbeiten eine faszinierende plastische Wirkung. Durch das Auflegen verschiedener Schablonen können an einzelnen Stellen oder durch mehrmaliges Sandstrahlen und Überstechen zwei oder mehrere Töne sich ergeben. Nach der Sandstrahlarbeit wird das Külbel kurz, etwa eine halbe Minute, auf 1000°C erwärmt, damit die aufgerauhten Oberflächen leicht verschmelzen bzw. anhaftende Teilchen vom Sandstrahlen am heißen Glas kleben. Anschließend wird mit einer zweiten Glasschicht überstochen. Gleichermaßen ist es denkbar, durch Sandstrahlen hergestellte Dekore von Hand nachzugravieren und damit in kleiner Serie unterschiedliche Merkmale zu geben. Der handwerkliche Eindruck wird dadurch noch unterstützt. Nach dem Überstechen wird in diesem Beispiel die Vase frei geformt und den Hohlraum erhält man, indem man einen Eisendorn in den Külbel einsticht. Danach läßt man den fertiggeblasenen Gegenstand an der Pfeife auf ca. 650 bis 700° C abkühlen, trennt ihn ab und läßt ihn im Kühlofen bei ca. 540° C ca. 16 Std. tempern. Danach kann die Bodenfläche geschliffen oder eine Randbearbeitung vorgenommen werden. Ähnlich erfolgt eine Tellerherstellung, wobei dann das Külbel frei aufgeschleudert wird. Aber auch andere Hüttentechniken wie Schleudern oder Pressen sind möglich.

Es ist klar, daß durch das erfindungsgemäße Verfahren sich eine Fülle von Gestaltungsmöglichkeiten ergeben, die durch das vorliegende Beispiel nicht erfaßt wurden. Die erfindungsgemäßen Glasgegenstände lassen sich auch großtechnisch herstellen, indem man das Külbel durch Pressen und Blasen in den bekannten Vorrichtungen erzeugt.

## Patentansprüche

1. Verfahren zur Erzeugung von lichtstreuenden und strukturierten Oberflächen in einer Zwischenglasschicht, indem die Oberfläche des Grundglases eines Külbels aufgerauht und nach der Behandlung mit einer zweiten Glasschicht überstochen wird, dadurch gekennzeichnet, daß das aus Kristall- oder Bleiglas vorgeformte Külbel nach dem Abkühlen auf ca. 500 bis 600° C sandgestrahlt wird, worauf ein kurzfristiges Wiedererhitzen erfolgt, um anschließend die aufgerauhte Oberfläche des Grundglases mit der zweiten Glasschicht zu überstechen; nach dem Fertigformen und einem weiteren Abkühlen wird der Glasgegenstand im Kühlofen getempert.

2. Verfahren zur Erzeugung von lichtstreuenden und strukturierten Oberflächen in einer Zwischenglasschicht nach Anspruch 1, dadurch gekennzeichnet, daß das Sandstrahlen und Überstechen mehrmals wiederholt wird.

3. Verfahren zur Erzeugung von lichtstreuenden und strukturierten Oberflächen in einer Zwischenglasschicht nach einem der Ansprüche 1 und 2, dadurch gekennzeichnet, daß verschiedene Körnungen von Sanden bzw. verschiedene Schablonen zum Abdecken der sandgestrahlten Flächen verwendet werden.

4. Verfahren zur Erzeugung von lichtstreuenden und strukturierten Oberflächen in einer Zwischenglasschicht nach Anspruch 1, dadurch gekennzeichnet, daß reliefartige Oberflächen des Grundglases mit der zweiten Glasschicht überstochen werden.

## Claims

1. Method for producing light dispersing and structured surfaces in an intermediate glass layer in which the surface of the base glass of a parison is roughened and coated with a second glass layer after the treatment, characterised in that the parison preformed of crystal or lead glass is sandblasted after cooling down to about 500 to 600° C, whereafter a short-term reheating occurs in order subsequently to coat the roughened surface of the base glass with the second glass layer; after finishing the forming and a further cooling down the glass object is tempered in the cooling furnace.

2. Method for producing light dispersing and structured surfaces in an intermediate glass layer as claimed in Claim 1, characterised in that the sandblasting and coating are repeated several times.

3. Method for producing light dispersing and structured surfaces in an intermediate glass layer as claimed in one of Claims 1 and 2, characterised in that differing grain sizes of sands or differing stencils for covering the sandblasted surfaces are used.

4. Method for producing light dispersing and structured surfaces in an intermediate glass layer as claimed in Claim 1, characterised in that relieflike surfaces of the base glass are coated with the second glass layer.

## Revendications

1. Procédé de fabrication de surfaces structurées et diffusant la lumière dans un objet en verre stratifié, la surface du verre de base d'une paraison étant rendue rugueuse et revêtue, surgravée ou larmée superficiellement (»überstochen«) avec une deuxième couche de verre après ce traitement, caractérisé par le fait que la paraison préformée en cristal ou en verre plombeux est dépolie par sablage après le refroidissement jusqu'à environ 500 à 600° C, après quoi l'on procède à un nouveau chauffage de courte durée pour surgraver la surface du verre de base rendue rugueuse avec la seconde couche de verre, l'objet en verre étant trempé dans un four à recuire après la mise en forme définitive et un autre refroidissement.

2. Procédé de fabrication de surface structurée et diffusant la lumière dans un objet en verre stratifié selon la revendication 1, caractérisé par le fait que la projection de sable et la surgravure sont renouvelées plusieurs fois.

3. Procédé de fabrication de surfaces structurées et diffusant la lumière dans un objet en verre stratifié selon l'une des revendications 1 et 2, caractérisé par le fait qu'on utilise différentes granulométries de sables ou différents gabarits pour recouvrir les surfaces dépolies par sablage.

4. Procédé de fabrication de surfaces structurées et diffusant la lumière dans un objet en verre stratifié selon la revendication 1, caractérisé par le fait que des surfaces en relief du verre de base sont surgravées avec la seconde couche de verre.